Europäisches Patentamt

European Patent Office

Office européen des brevets

(11) Publication number: **0 170 816 B1**

# EUROPEAN PATENT SPECIFICATION

(45) Date of publication of patent specification: **16.10.91**   (51) Int. Cl.⁵: **G09G 1/16, G09G 1/28**

(21) Application number: **85106931.0**

(22) Date of filing: **05.06.85**

(54) Digital display system employing a raster scanned display tube.

(30) Priority: **16.07.84 US 631043**

(43) Date of publication of application:
**12.02.86 Bulletin 86/07**

(45) Publication of the grant of the patent:
**16.10.91 Bulletin 91/42**

(84) Designated Contracting States:
**AT BE CH DE FR IT LI NL SE**

(56) References cited:
**FR-A- 1 500 970**
**US-A- 4 349 839**
**US-A- 4 408 200**
**US-A- 4 453 183**

(73) Proprietor: **International Business Machines Corporation**
**Old Orchard Road**
**Armonk, N.Y. 10504(US)**

(72) Inventor: **Rackley, Darwin Preston**
**17755 Maplewood Drive**
**Boca Raton Florida 33431(US)**
Inventor: **Saenz, Jesus Andres**
**983 Ramblewood Drive**
**Coral Springs Florida 33065(US)**
Inventor: **Yosim, Paul Stewart**
**931 Gardenia Drive 567**
**Delray Beach Florida 33444(US)**

(74) Representative: **Killgren, Neil Arthur**
**IBM United Kingdom Limited Intellectual Property Department Hursley Park**
**Winchester Hampshire SO21 2JN(GB)**

## EP 0 170 816 B1

### Description

This invention relates to digital display systems, and in particular to such display systems employing raster scanned cathode ray tubes performing automatic mode switching.

The primary use of raster scanned cathode ray tubes has been in the television field. However, over the last decade, such raster scanning has found increasing uses in the computer display field. At the present time, an overwhelming majority of computer systems use such displays for communicating instructions and results to the operator.

In both television and computer display, many modes of operation have been used and proposed. In television, for example, modes of operation with raster line structures of 405, 525, 625 and 805 lines have been used. In both Britain and France, different television transmitters still generate signals using different line structures, 405 and 625 in Britain, and 805 and 625 in France. In both of these countries, at least up to a few years ago, receivers were provided with manual switching arrangements to alter the horizontal time base frequence when switching between high and low line definition channels. Some attempts were made to provide automatic switching of the time base frequency based on the incoming signals, as is illustrated in GB-A-1,188,294. In that Patent, the horizontal synchronising signals are applied to a circuit which is tuned to the frequency of these signals for one line definition standard (e.g. 405 lines). The circuit, therefore, provides different outputs in accordance with the different line structures required by the input signals, and these outputs are used to drive relays to switch the horizontal time base to corresponding frequencies (see also FR-A-1 500 970)

A similar, but more complex arrangement is employed in the computer video display device described in EP-A-0 004 798 In that arrangement, the video display device is adapted to operate on different line standards in accordance with received video data. A phase locked loop tone generator which receives the composite video signal is tuned to the line frequency of one of the line standards. Accordingly, it provides different outputs in accordance with the line standard indicated by the video signal. These outputs are used to switch the horizontal time base frequency.

The present invention is based on the realisation that in a digital display system in which signals for the display are developed in a computer system, the polarity of the synch signals can be selected at will. Consequently, switching of the display monitor can be achieved by reference to the polarity of at least one of the synch signals. Note that in embodiments of the invention described hereinafter, the synch signals are defined as being of one polarity when each synch pulse comprises a rise from a given reference level to a higher level, and of the opposite polarity when each synch pulse comprises a drop from the highest level to the reference level. Thus, if the digital signals generated by the computer are for a first data format, at least one of the synch signal trains, for example the vertical synch signals, is of one polarity, and if the computer signals are for a different format these synch signals are of the opposite polarity. The circuits which detect the polarity to provide the switching functions in the monitor, as they do not use tuned circuits, are simpler and more reliable than those of the prior art arrangements. In addition, the formats to be switched may be the scanning frequencies and/or the video signal format.

The present invention provides a raster scan cathode tube display unit, adapted to be coupled to receive data signals defining the data to be displayed and horizontal and vertical synchronising signals and arranged to develop a raster scan display on the cathode ray tube of the unit, the display unit incorporating control circuitry responsive to input signals, when received, to switch the frequency of at least one of the time bases produced for generating the raster and thereby to alter the line structure of the display, characterised in that the control circuitry is so responsive to the polarity of at least one of the horizontal and the vertical synchronising signal trains.

The present invention will be described further by way of example with reference to embodiments thereof as illustrated in the accompanying drawings in which:-

Figure 1 is a block diagram of a display system including a display adapter coupled to a computer and a display monitor;

Figure 2 is a more detailed circuit diagram of the monitor control circuit of the display monitor of Figure 1;

Figure 3 is a waveform diagram showing synchronising signals applied to the display monitor from the display adapter; and

Figure 4 is a diagram of a modified version of the monitor control circuit in Figure 2.

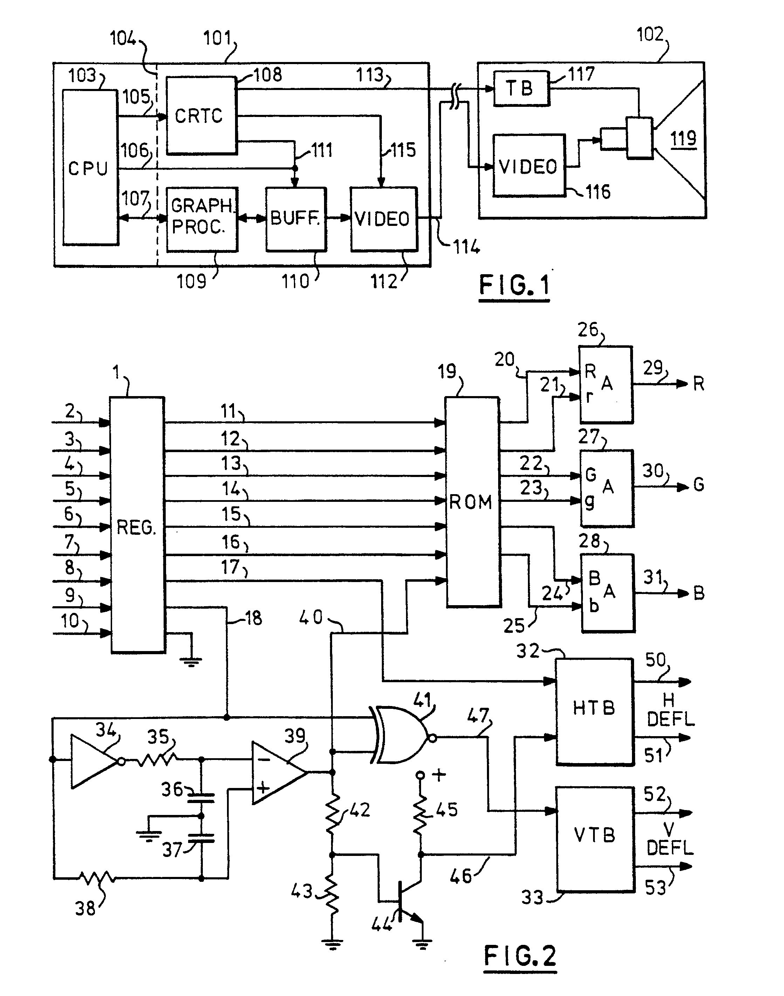

The digital data display arrangement of Figure 1 comprises a microcomputer 101 coupled to a display monitor 102. The microcomputer is shown in highly simplified form and comprises a central processing unit 103 coupled to a display adapter which comprises the components to the right of broken line 104. The display adapter comprises a programmable CRT controller 108, a graphics processor 109, a buffer store

2

110, and a video processor 112. The CRT controller 108 is responsive to tuning and control signals from CPU 103 on a bus 105 to generate synch signals on a bus 113, address signals for buffer 110 on a bus 111 and control signals for video processor 112 on a bus 115. CPU 103 also provides address signals for the buffer 110 over a bus 106. Output digital signals from video processor 112 are applied over a bus 114 to video circuits 116 in the display monitor which, in response to these signals, generate the colour drive signals for a CRT 119. The synch signals from the CRT controller 108 on bus 113 are used to drive time base generators 117 which provide conventional drive signals to the deflection coils of CRT 119.

In operation, graphics processor 109 processes graphics data from CPU 13 and places the processed signals into buffer store 110. These processed signals may be stored in buffer 110 in an all points addressable mode, in which each picture element to be displayed is represented, in the buffer, by digital data representing the colour and intensity of that element. Alternatively, the buffer store may receive character data (either alphanumeric or graphic) which is subsequently decoded to provide the picture element data. Data is stored in the buffer at addresses defined by the CPU over bus 106. This data is subsequently read from the buffer by address signals from the CRT controller, passed to the video processor for any required conversion, and then applied over bus 114 to the monitor 102. Thus the data in buffer 110 is updated under the control of the CPU and transmitted to the monitor under the control of the CRT controller 108, which also provides the synch signals. CRT controller 108, as it is programmable, can control the display adapter to operate in different modes, such as the above mentioned all points addressable and character generator modes. In addition, it is programmed to determine the format of the synch pluses applied to the monitor.

Figure 2 shows, in simplified form, the major circuit components of the monitor 102. The monitor includes a register 1 coupled to receive digital colour signals on lines 2 through 6, horizontal synchronising signals on line 8 and earth potential or line 10, which line is also coupled to the screen the coupling cable which incorporates lines 2 through 9. Colour signal outputs from register 1 are applied, over lines 11 through 16, to logic means 19. Logic means 19 is shown as a read-only memory, but it may be any other type of logic device, for example a programmable logic array, which is adapted to perform the logic which will be described later.

In response to the input colour signals, which, as will be seen later, will either be on lines 11 through 14 or on lines 11 through 16, logic means 19 generates digital colour drive signals on lines 20 through 25. These signals are applied as inputs to video drive amplifiers 26 through 28 which respectively provide analog outputs to drive the red, green and blue guns of a colour cathode ray tube (not shown) over lines 29, 30 and 31. Each of these amplifiers has an intensified colour input (R, G and B) and a non-intensified colour input (r, g, b) and can, therefore, generate any of four intensities depending on the values of the pair of digital inputs. Thus, the amplifiers together are capable of selecting 64 different colour drives.

Referring back to register 1, output line 17 carries the horizontal synch signals. These are coupled to a horizontal time base generator 32 which provides horizontal deflection currents for the horizontal deflection coils of the CRT over lines 50 and 51. Vertical synch signals from register 1 are applied over line 18, through an exclusive NOR (XNOR) gate 41 and line 47, to a vertical time base generator 33 to drive the vertical deflection coils of the CRT over lines 52 and 53. As will be seen later, the purpose of XNOR 41 is to ensure that the polarity of the synch signals applied to time base generator 33 is constant irrespective of the polarity of these signals on line 18.

The vertical synch signals on line 18 are also applied to a control circuit which develops control signals for logic means 19, the time base generators 32 and 33, and XNOR 41 in accordance with the polarity of these synch signals. Line 18 is coupled, through an inverter 34 and integrator circuit comprising resistor 35 and capacitor 36, to the positive input of a differential amplifier 39. The negative input of differential amplifier receives the signals from line 18 uninverted but integrated by an integrator comprising resistor 38 and capacitor 37. The output of amplifier 39 provides control signals to logic means 19 and XNOR 41 over a line 40. These signals on line 40 are also applied, through a potentiometer network comprising resistors 42 and 43, to the base of a PNP transistor 44. The collector of transistor 45 is coupled to a positive potential through resistor 45 and directly, over line 46, to a control input of the time base generator 32.

One example of the operation of the Figure 2 system will now be detailed to assist in the understanding of the invention. The monitor system shown in Figure 2 is, of course, adapted to present displays on the CRT in response to the digital signals received over lines 3 through 9. These signals are generated by a display adapter within a computer system as shown in Figure 1 which assembles the digital data and provides sequences of this data for display. The primary object of the invention is to effect automatic switching within the monitor for different data formats. In the present example, two switched modes corresponding to two specific data formats will be described, though it will become clear later that switching between up to four modes could be achieved by modification of the Figure 2 system. In the present

3

example, in the first of the switched modes, MODE 1, the monitor is adapted to display 640 x 200 pels, each with any of 16 colours. In the second mode, MODE 2, the monitor is adapted to display 640 x 350 pels, each with any of 64 colours. In MODE 1, the monitor responds to positive horizontal and vertical synch pulses and to colour signals on only four of the input lines, for example lines 2 through 5, in Figure 2. In MODE 2, the monitor responds to positive horizontal and negative vertical synch pulses from the adapter and to colour signals on all of the input lines 2 through 7 in Figure 2. Thus it should be noted that the polarity of the synch pulses, generated by the display adapter of the computer, must correspond to the data format. If the adapter can only provide, or currently operates to provide, a MODE 1 signal format, then it is designed to generate only, or it generates currently, positive synch pulses. If the adapter can only provide, or currently operates to provide a MODE 2 signal format, then it is designed to generate only, or it generates currently, positive horizontal and negative vertical synch pulses. Since automatic switching between modes is built into the monitor system, it can be coupled to a MODE 1, a MODE 2 or a dual MODE adapter, and operate, without manual adjustment. A dual MODE adapter is one which is able to switch between the data formats. An example of such an adapter would be one which can be switched between a low definition character generator operation, corresponding to MODE 1 in the monitor, and a high definition all points addressable operation corresponding to MODE 2 in the monitor. Alternatively, the adapter card could use character generation and all points addressable operations in both modes, with low definition in the first mode and high definition in the second mode. With such a switchable adapter, it is clear that reversal of the polarity of the vertical synch pulses can be easily achieved during switching. In order to display the 640 x 200 pels in MODE 1, the vertical time base frequency is set to 60 Hz, the horizontal to 15 kHz. In this mode the horizontal time base width control is set to overscan the CRT to adjust for the difference in the aspect ratio of the display data between the two modes. In MODE 2, the vertical time base frequency remains at 60 Hz, the horizontal time base frequency is set to 22 kHz and the width is set for normal scan.

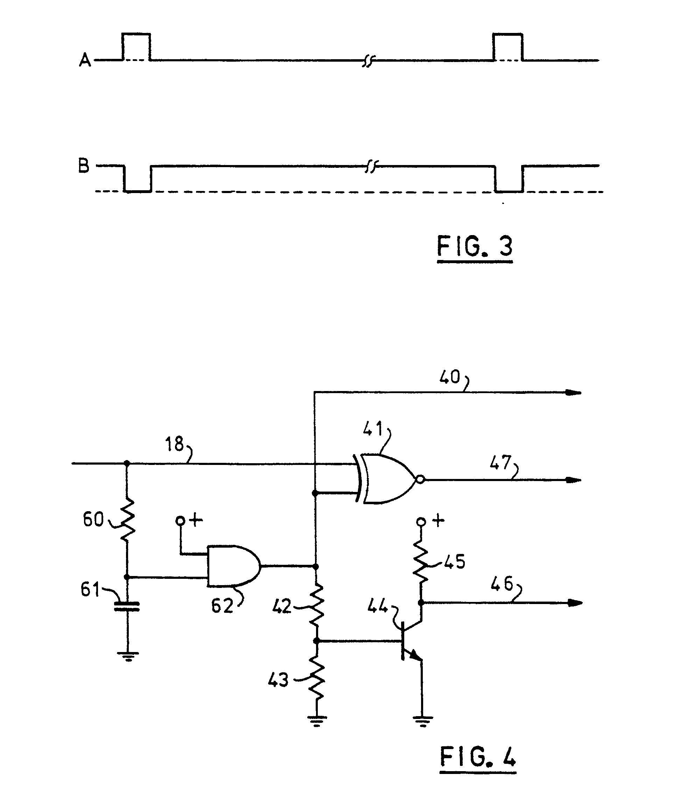

Referring back to Figure 2, the input signals on lines 2 through 9 are passed through register 1 to the logic means 19, the horizontal time base 32, and, over line 18, the vertical synch signals are applied to XNOR gate 41 and to inverter 34. In MODE 1, the synch signals are positive, as shown at waveform A of Figure 3. Inverter 34 provides an output signal which is the inverse of waveform A, that is, a signal with a normally high level which drops during each synch pulse. This output signal is applied to the integrator, comprising resistor 35 and capacitor 36, which has a time constant considerably longer than the period of each synch pulse. Thus, a substantially constant high level signal is applied from the integrator to the negative input of differential amplifier 39. At the same time, the un-inverted signal of waveform A of Figure 3 is applied to the integrator, comprising resistor 38 and capacitor 37, which is similar to integrator 35, 36. Thus, a substantially constant low level signal is applied from integrator 38, 37 to the positive input of differential amplifier 39. In response to these inputs, differential amplifier 39 provides a substantially constant low level output. This low level output is applied over line 40 to XNOR gate 41 which, therefore inverts the positive synch pulses applied to its other input to provide negative synch pulses to vertical time base generator 33. The low output on line 40 is coupled to logic means 19, for the purpose to be described below, and, through network 42, 43, to transistor 44. This transistor is therefore set to a low current level, so a positive potential through resistor 45 is applied to line 46. this line is coupled within time base generator 32 to electronic switches which are set by the positive potential on the line. When set, these switches couple frequency determining and width determining components into the time base to set it to 15 kHz and overscan as required for MODE 1.

In MODE 2, the vertical synch pulses on line 18 are negative, as shown at waveform B of Figure 3. Thus, inverter 34 applies a normally low level output, which rises for each synch pulse, to integrator 36, 36. This integrator therefore delivers a substantially constant low level signal to the negative input of integrator 39. The un-inverted waveform B is applied to integrator 38, 37 to provide a substantially constant high level signal to the positive input of differential amplifier 39. The output of this amplifier, in response to these input signal levels, is a substantially constant high level. This is applied, over line 40, to XNOR gate 41 so that the negative going synch pulses applied to the other input of this gate pass through the gate un-inverted. The vertical time base generator, therefore, still receives negative going synch pulses over line 47. Now, however, the signal level on line 40 applied to logic means 19 is high, the effect of which will be described later. This high level is also applied through network 42, 43 to cause transistor 44 to conduct heavily, bringing the potential on line 46 near to zero. This resets the electronic switches in the horizontal time base generator 32 to cut out the above mentioned frequency and width determining components for MODE 1 and bring in further such components to set this time base to 22 kHz and normal scan width. Thus, the system, as so far described, automatically switches the CRT deflection system to allow for the different modes in accordance with the polarity of the vertical synch signals while providing common polarity synch signals for the vertical time base generator in both modes.

As has been mentioned above, line 40 from differential amplifier 39 is also applied as an input to logic means 19. It will be recalled that this line is set to a low level in MODE 1 and a high level in MODE 2. In MODE 1 the colour signals from the adapter arrive over lines 2 through 5. These signals may represent intensity, red, green and blue (I.R.G.B.) digital signals on the respective lines to provide 16 colours on the C.R.T. In MODE 2 six lines, 2 through 7 carry respectively high intensity red, red, high intensity green, green, high intensity blue, and blue (RrGgBb) digital signals to provide 64 colours. In MODE 1 the extraneous lines, that is lines 6 and 7 may either be earthed at the adapter or provide 'don't care' inputs to logic means 19.

In MODE 2, logic means 19 responds to the high level on line 40 by gating the signals from register 1 over lines 11 through 16 directly to the corresponding RrGgBb inputs to amplifiers 26 through 28 over lines 20 through 25.

In MODE 1, the low level on line 40 is applied to logic means 19. This causes logic means 19 to decode the IRGB signals on lines 11 through 14 from register 1 as follows:

| I R G B | R r G g B b | Colour |
|---------|-------------|--------|
| 0 0 0 0 | 0 0  0 0  0 0 | Black |
| 0 0 0 1 | 0 0  0 0  1 0 | Blue |
| 0 0 1 0 | 0 0  1 0  0 0 | Green |
| 0 0 1 1 | 0 0  1 0  1 0 | Cyan |
| 0 1 0 0 | 1 0  0 0  0 0 | Red |
| 0 1 0 1 | 1 0  0 0  1 0 | Magenta |
| 0 1 1 0 | 1 0  0 1  0 0 | Brown |
| 0 1 1 1 | 1 0  1 0  1 0 | Dark grey |
| 1 0 0 0 | 0 1  0 1  0 1 | Light grey |
| 1 0 0 1 | 0 1  0 1  1 1 | Light blue |
| 1 0 1 0 | 0 1  1 1  0 1 | Light green |
| 1 0 1 1 | 0 1  1 1  1 1 | Light cyan |
| 1 1 0 0 | 1 1  0 1  0 1 | Light red |
| 1 1 0 1 | 1 1  0 1  1 1 | Light magenta |
| 1 1 1 0 | 1 1  1 1  0 1 | Light yellow |
| 1 1 1 1 | 1 1  1 1  1 1 | White |

Thus, in MODE 1, logic means 19 decodes the four parallel input signals to apply a selection of 16 of the possible 64 drive combinations to amplifiers 26 through 28. In MODE 2, the logic means 19 effects a straight gating operation to pass the six parallel input signals directly to amplifiers 26 through 28. As in the case of the time base control the chosen operation is selected in accordance with the polarity of the vertical synch signals received from the adapter. As indicated in Figure 2, logic means 19 comprises a read-only memory, but it may be in the form of a programmable logic array device. Suitably programming either of these devices to perform the logical operations defined above would present no difficulty to one skilled in the art. Alternatively, logic means 19 could be implemented by tri-state gates or multiplexers and simple switching logic.

The components 34 through 47 in the control circuit of Figure 2 may be replaced by other circuitry performing the same function. One other form of this control circuit is shown in Figure 4, wherein the vertical synch pulses are applied to a single integrator, comprising resistor 60 and capacitor 61, similar to those in Figure 2, and having a long time constant compared with the period of the synch pulses. The integrator output is applied to one input of an AND gate 62, the other input of which is coupled to a constant positive level. Thus, when the vertical synch pulses are high, as shown at A in Figure 3, the integrator output is low, so the output of AND gate 62 is low. With the low synch pulses shown at B in Figure 2, the output of the integrator is high, so the output of AND gate 62 is high. Accordingly, as with the Figure 2 system, the Figure 4 system provides a substantially constant low output on control line 40, a high output on line 46 and negative vertical synch pulses on line 47 in response to the positive synch pulses of waveform A of Figure 3 appearing on line 18. In response to the negative vertical synch pulses, line 40 goes high, line 46 goes low, and the synch pulses on line 47 still remain negative. Alternatively, AND gate 62 could be replaced by a single input threshold switching buffer device to provide the same outputs on line 40.

It is clear that, if the vertical time base generator should happen to require positive synch pulses, this can easily be achieved by replacing XNOR 41 by an exclusive OR gate.

Whilst switching between only two modes has been shown, it will be evident to one skilled in the art that switching between up to four modes can be achieved by looking at combinations of the polarity of both the horizontal and vertical synch signals. Thus, by expanding the control circuitry to be responsive to the polarity of both synch signals, up to four horizontal time base frequencies could be selected. In addition, by also controlling the vertical time base frequency, the four modes could encompass various display formats with widely varying displays. Furthermore, by the use of two control lines to the colour logic means, line structures of up to four differing colour signal formats could be used.

## Claims

1. A raster scan cathode tube display unit, adapted to be coupled to receive data signals defining the data to be displayed and horizontal and vertical synchronising signals and arranged to develop a raster scan display on the cathode ray tube of the unit, the display unit incorporating control circuitry responsive to input signals, hen received,to switch the frequency of at least one of the time bases produced for generating the raster and thereby to alter the line structure of the display, characterised in that the control circuitry is so responsive to the polarity of at least one of the horizontal and the vertical synchronising signal trains.

2. A display unit as claimed in claim 1 wherein the control circuitry includes a slow response, relative to the synchronising signal rate, integrator, the output of which defines the polarity of the synchronising signals received.

3. A display unit as claimed in claim 1 or claim 2, wherein the received data signals are digital colour signals and are received together with the synchronising signals from a computer display adapter, in parallel form on different lines from the adapter, the control circuitry being responsive to the polarity of the synchronising signals on at least one of the synchronising signal lines to generate digital control signals coupled to control the frequency of at least one of the time base generators and to, where appropriate, invert received sychronising signals applied to the time base generators so that the polarity of the sychronising signals so applied is constant.

4. A display unit as claimed in claim 3 including a display adapter, said display adapter being arranged to provide the parallel digital colour signals on either all of the different data lines or on less than all of the different lines with the polarity of the synchronising signals on the at least one line varying in correspondence with the different colour signal formats provided, and the display unit further including logic means, responsive to the generated digital control signals and connected to receive the colour signals, to provide digital colour output signals on all of a fixed number of output lines in response to the colour signals and the control signals.

5. A display unit as claimed in Claim 4 in which the output lines correspond in number to the different lines from the adapter and the logic means is adapted to pass the colour signals from the adapter unchanged to the output lines when the colour signals are in one format and to encode the colour signals on less than all of the different lines into output signals on all the output lines when the colour signals are another format.

6.  A digital display unit as claimed in Claim 5 in which the logic means comprise a read-only memory.

7.  A display unit according to Claim 2 or any Claim appendant thereto, in which the logic means comprises an exclusive NOR circuit or an exclusive OR circuit, depending on which polarity of synchronising signals are designed to respond, to combine the received synchronising signals with the integrated polarity signal level to regenerate sychronising signals of a constant polarity.

**Revendications**

1.  Unité d'affichage à tube à rayons cathodiques à balayage de trame, prévue pour être connectée de manière à recevoir des signaux de données définissant les données à afficher et des signaux de synchronisation horizontale et verticale et agencée de manière à engendrer un affichage à balayage de trame sur le tube à rayons cathodiques de l'unité, l'unité d'affichage comprenant un circuit de commande qui répond aux signaux d'entrée, lorsqu'ils sont reçus, pour commuter la fréquence d'au moins une des bases de temps produites pour la création de la trame, et pour modifier ainsi la structure de lignes de l'affichage, caractérisée en ce que le circuit de commande répond ainsi à la polarité d'au moins un des trains de signaux de synchronisation horizontale et de signaux de synchronisation verticale.

2.  Unité d'affichage suivant la revendication 1, dans laquelle le circuit de commande comprend un intégrateur à réponse lente, par rapport à la cadence des signaux de synchronisation, dont la sortie définie la polarité des signaux de synchronisation reçus.

3.  Unité d'affichage suivant la revendication 1 ou la revendication 2, dans laquelle les signaux de données reçus sont des signaux de couleur numériques et ils sont reçus accompagnés des signaux de synchronisation venant d'un adaptateur d'affichage d'ordinateur, sous forme parallèle sur différentes lignes venant de l'adaptateur, le circuit de commande répondant à la polarité des signaux de synchronisation sur au moins une des lignes de signaux de synchronisation de manière à engendrer des signaux numériques de commande utilisés pour fixer la fréquence d'au moins un des générateurs de base de temps et pour inverser, lorsque c'est approprié, les signaux de synchronisation reçus et appliqués aux générateurs de base de temps, de sorte que la polarité des signaux de synchronisation ainsi appliqués est constante.

4.  Unité d'affichage suivant la revendication 3, comprenant un adaptateur d'affichage, ledit adaptateur d'affichage étant conçu pour fournir les signaux numériques parallèles de couleur sur toutes les différentes lignes de données ou sur moins de la totalité des différentes lignes, la polarité des signaux de synchronisation sur ladite au moins une ligne variant en correspondance des différents formats de signaux de couleur fournis, et l'unité d'affichage comprenant en outre des moyens logiques, répondant aux signaux de commande numériques engendrés et connectés pour recevoir les signaux de couleur, qui fournissent des signaux numériques de sortie de couleur sur la totalité d'un nombre fixe de lignes de sortie en réponse aux signaux de couleur et aux signaux de commande.

5.  Unité d'affichage suivant la revendication 4, dans laquelle les lignes de sortie correspondent en nombre aux différentes lignes venant de l'adaptateur, et les moyens logiques sont prévus pour transmettre les signaux de couleur venant de l'adaptateur sans changement aux lignes de sortie lorsque les signaux de couleur sont dans un premier format, et pour coder les signaux de couleur sur moins de la totalité des différentes lignes en signaux de sortie sur toutes les lignes de sortie lorsque les signaux de couleur sont dans un autre format.

6.  Unité d'affichage suivant la revendication 5, dans laquelle les moyens logiques comprennent une mémoire morte.

7.  Unité d'affichage suivant la revendication 2, ou une revendication dépendant de celle-ci, dans laquelle les moyens logiques comprennent un circuit NON-OU exclusif ou un circuit OU exclusif, selon la polarité des signaux de synchronisation à laquelle ils-sont prévus pour répondre, de manière à combiner les signaux de synchronisation reçus avec le niveau de signal de polarité intégré afin de régénérer des signaux de synchronisation d'une polarité constante.

EP 0 170 816 B1

**Patentansprüche**

1. Anzeigeeinheit mit einer nach dem Rasterverfahren arbeitenden Kathodenstrahlröhre, wobei die Anzeigeeinheit so angeschlossen werden kann, daß sie Datensignale, welche die anzuzeigenden Daten definieren sowie horizontale und vertikale Synchronisiersignale empfängt und die eingerichtet ist, um eine Rasteranzeige auf der Kathodenstrahlröhre der Einheit zu erzeugen, und die Anzeigeeinheit eine Steuerschaltung beinhaltet, die auf Eingangssignale anspricht, bei deren Empfang die zum Bilden des Rasters erzeugte Frequenz zumindest einer der Zeitbasen umgeschaltet und hiedurch die Linienstruktur der Anzeige geändert wird, dadurch gekennzeichnet, daß die Steuerschaltung auf die Polarität von zumindest einer der horizontalen bzw. vertikalen Synchronisiersignalfolgen anspricht.

2. Anzeigeeinheit nach Anspruch 1, bei welcher die Steuerschaltung einen, verglichen mit der Synchronisiersignalfrequenz, langsamen Integrator aufweist, dessen Ausgang die Polarität der Synchronisiersignale festlegt.

3. Anzeigeeinheit nach Anspruch 1 oder 2, bei welcher die empfangenen Datensignale digitale Farbsignale sind und zusammen mit den Synchronisiersignalen in paralleler Form auf verschiedenen Leitungen von einem Computeranzeigeadapter empfangen werden, die Steuerschaltung auf die Polarität der Synchronisiersignale auf zumindest einer der Synchronisiersignalleitungen anspricht, um angekoppelte digitale Steuersignale zu erzeugen, um die Frequenz zumindest eines der Zeitbasisgeneratoren zu steuern und um, wo angemessen, empfangene, an die Zeitbasisgeneratoren angelegte Synchronisiersignale zu invertieren, so daß die Polarität der so angelegten Synchronisiersignale konstant bleibt.

4. Anzeigeeinheit nach Anspruch 3 mit einem Anzeigeadapter, der dazu eingerichtet ist, die parallelen digitalen Farbsignale entweder auf allen der verschiedenen Datenleitungen oder auf weniger als allen verschiedenen Leitungen zur Verfügung zu stellen, wobei die Polarität entsprechend der vorgesehenen, verschiedenen Farbsignalformate variabel ist, und die Anzeigeeinheit weiters logische Mittel aufweist, die auf die erzeugten digitalen Steuersignale ansprechen und zum Empfang der Farbsignale angeschlossen sind, um in Abhängigkeit von den Farbsignalen und den Steuersignalen digitale Farbausgangssignale an allen einer festen Anzahl von Ausgangsleitungen zur Verfügung zu stellen.

5. Anzeigeeinheit nach Anspruch 4, bei welcher die Anzahl der Ausgangsleitungen der Anzahl der verschiedenen Leitungen von dem Adapter entspricht und die logischen Mittel dazu eingerichtet sind, die Farbsignale von dem Adapter zu den Ausgangsleitungen ungeändert durchzulassen, falls die Farbsignale ein Format aufweisen, und die Farbsignale auf weniger als allen der verschiedenen Leitungen in Ausgangssignale auf allen der Ausgangsleitungen zu codieren, falls die Farbsignale ein anderes Format aufweisen.

6. Anzeigeeinheit nach Anspruch 5, bei welcher die logischen Mittel einen Festwertspeicher enthalten.

7. Anzeigeeinheit nach Anspruch 2 oder einem der darauf bezogenen Ansprüche, bei welchem die logischen Mittel, je nachdem auf welche Polarität der Synchronisiersignale sie ansprechen sollen, eine Exklusiv-NOR-Schaltung oder eine Exklusiv-ODER-Schaltung enthalten, um die empfangenen Sychronisiersignale mit dem integrierten Polaritäts-Signalpegel zu kombinieren, um Synchronisiersignale mit konstanter Polarität zu regenerieren.

FIG.1

FIG.2

FIG. 3

FIG. 4